# EUROPÄISCHE PATENTSCHRIFT

(11) **EP 0 915 055 B1**
(45) Veröffentlichungstag und Bekanntmachung des Hinweises auf die Patenterteilung: **19.12.2001**
(21) Anmeldenummer: 98890314.2
(22) Anmeldetag: 29.10.1998
(51) Int. Cl.: C01B 17/02, B01D 19/00

(54) **Vorrichtung zum Abtrennen von Gasen aus Flüssigkeiten und Verwendung der Vorrichtung zur Abtrennung von Schwefelwasserstoff aus flüssigem Schwefel**
Apparatus for separating gases from liquids and use of the apparatus for the separation of hydrogen sulfide from liquid sulfur
Dispositif pour la séparation de gaz de liquides et utilisation d'un tel dispositif pour la séparation d'hydrogène sulfuré de soufre liquide

(30) Priorität: 07.11.1997 AT 188697
(43) Veröffentlichungstag der Anmeldung: 12.05.1999
(73) Patentinhaber: OMV Aktiengesellschaft, 1091 Wien (AT)
(72) Erfinder: Hofer, Wolfgang, Dipl.-Ing., 1090 Wien (AT)
(74) Vertreter: Widtmann, Georg, Dipl.-Ing. Dr. techn.

(56) Entgegenhaltungen:
- WO-A-95/06616
- WO-A-97/10174
- DD-A- 291 065
- DD-A- 292 635
- "CONTROLLING H2S EVOLUTION FROM SULPHUR" SULPHUR, Nr. 233, 1. Juli 1994, Seiten 35/36, 38, 40/41, 43-45, XP000455254

## Beschreibung

Die Erfindung hat eine Vorrichtung zum Abtrennen von Gasen aus Flüssigkeiten und die Verwendung dieser Vorrichtung zur Abtrennung von Schwefelwasserstoff aus flüssigem Schwefel zum Gegenstand.

Die Abtrennung von Gasen aus Flüssigkeiten, insbesondere die Substitution von Gasen durch andere Gase, ist bei der Synthese von Stoffen von besonders hoher Bedeutung, wenn die Gase während der Lagerung aus dem gewonnenen Stoff entweichen können und geruchsbelästigend, gesundheitsgefährdend oder explosiv sind. Diese Gegebenheiten liegen insbesonders bei Schwefel vor, welcher nach dem Claus-Verfahren gewonnen wurde. Hierbei wird entweder Schwefelwasserstoff mit Sauerstoff zu Schwefel und Wasser verbrannt oder es wird ein Teil des Schwefelwasserstoffes zu Schwefeldioxid und Wasser verbrannt, wobei in einer zweiten Stufe Schwefeldioxid und Schwefelwasserstoff zu Schwefel und Wasser umgesetzt werden. Diese Reaktionen sind exotherm und der Schwefel fällt in flüssiger Form an. Im Schwefel gelöst befindet sich Schwefelwasserstoff, welcher jedoch nicht nur gelöst, sondern auch in Form von Wasserstoffpolysulfid, das ebenfalls flüssig ist, im Schwefel vorliegt. Sowohl der flüssige als auch der feste Schwefel geben über lange Zeit Schwefelwasserstoff ab, welcher bereits in geringen Konzentrationen geruchsbelästigend ist, eine hohe Toxizität aufweist und mit Luft explosive Gemische bildet. Schwefel wird nicht nur in fester Form, sondern auch in flüssiger Form in Tanks gelagert und transportiert.

Zur Entfernung von Schwefelwasserstoff aus flüssigem Schwefel ist es bekannt, Verbindungen, beispielsweise Ammoniak, zuzusetzen, um das Austreiben zu beschleunigen. Hierbei werden, wenn auch nur in geringem Maße, Salze erzeugt, welche bei der Weiterverarbeitung des Schwefels, beispielsweise dessen Oxidation, unerwünscht sind.

Bei einem weiteren Verfahren sind in einer gasdicht abgeschlossenen Wanne, in welcher flüssiger Schwefel angeordnet ist, Kolonnen mit Prallblechen angeordnet, durch welche der flüssige Schwefel mit Luft geleitet wird. Es können mehrere Wannen, in welchen jeweils eine Kolonne angeordnet ist, hintereinandergeschaltet werden, wobei der entweichende Schwefelwasserstoff mit einem Spülgas gemeinsam mit Luft einem Brenner zugeführt wird. Vorkehrungen gegen Explosionen oder Verstopfungen der Kolonne sind hierbei nicht vorgesehen.

Bei einer weiteren Ausführungsform kann in den oben angeführten Kolonnen ein Festbett eines Katalysators, beispielsweise Aluminiumoxid, vorgesehen sein. Auch bei dieser Ausführungsform sind keine konstruktiven Maßnahmen bei Verstopfungen der Kolonne bzw. Vorkehrungen gegen Explosionen vorgesehen.

Aus der WO 97/10174 wird ein Verfahren und eine Vorrichtung zum Entgasen von Schwefel bekannt. Die Vorrichtung weist zumindest zwei Entgasungsstationen auf, die sowohl unten als auch oben durchflußmäßig verbunden sind. Der flüssige Schwefel fließt von einer zur nächsten Entgasungsstation und von dieser in eine Pumpenstation. Als Gase zum Entgasen werden sauerstoffhältige Gase aber auch Stickstoff und Kohlenwasserstoffe vorgeschlagen. Konstruktive Maßnahmen zur sicheren Entgasung beschränken sich auf das Absaugen von Gasen. Den hydrostatischen Störmöglichkeiten wird nicht Rechnung getragen.

In der Veröffentlichung "Controlling H₂S evolution from sulphur", Sulphur 233 (1994) 35ff werden eine hohe Anzahl von Verfahren zur Entgasung von flüssigem Schwefel mit und ohne Katalysator beschrieben. Konstruktive Einzelheiten sind dieser Veröffentlichung nicht zu entnehmen. Nach den dort angeführten Verfahren soll ein Schwefel erhalten werden können, der ca. 3,3 (+/- 1,4) ppm H₂S enthält.

Der vorliegenden Erfindung ist zum Ziel gesetzt, eine Vorrichtung zum Abtrennen von Gasen, insbesondere Schwefelwasserstoff, aus Flüssigkeiten, insbesondere flüssigem Schwefel, zu schaffen, die kurze Behandlungszeiten ermöglicht, das Risiko zur Bildung von explosiven Gemischen im wesentlichen verhindert und die Herstellung eines entgasten Stoffes, insbesondere eines flüssigen oder festen Schwefels, erlaubt, der geringste Mengen von unerwünschten Gasen, z. B. Schwefelwasserstoff, aufweist.

Die erfindungsgemäße Vorrichtung zum Abtrennen von Gasen, insbesondere Schwefelwasserstoff, aus Flüssigkeiten, insbesondere flüssigem Schwefel, mit einer gasdicht abgeschlossenen ersten Wanne, mit Zu- und Ableitung für die Flüssigkeit, zumindest einem oben und unten offenen Reaktor, welcher eine Gaszuführung mit Gasverteiler in seinem unteren Bereich und einen Katalysator, z. B. Aluminiumoxid, aufweist, und einer ersten Gasableitung, besteht im wesentlichen darin, daß der Reaktor in einer Glocke in der ersten Wanne, die vorzugsweise Heizeinrichtungen für Flüssigkeit aufweist, angeordnet ist, die in Funktionsstellung gasdicht ist, welche eine weitere Gasableitung aufweist und die Zuleitung der Flüssigkeit im unteren Bereich der Glocke unterhalb des oberen Endes des Reaktors, aus welchem die Flüssigkeit austritt, vorgesehen ist. Durch das Vorsehen von einer Wanne und einer Glocke für die Flüssigkeit, insbesondere den flüssigen Schwefel, kann ein Absaugen des in der Flüssigkeit gelösten Gases in zwei Stufen durchgeführt werden, so daß eine besonders effiziente Entgasung erreicht wird, wobei gleichzeitig die Konzentrationen des zu entfernenden Gases in einem Spülgas, beispielsweise das aus der Claus-Anlage austretende Gas, besonders niedrig gehalten werden kann, da zwei getrennte Gasräume vorliegen können. Dadurch, daß der Reaktor in einer gasdichten Glocke angeordnet ist, wird weiters erreicht, daß in der Glocke eine besonders intensive Entgasung durchgeführt werden kann, wobei durch die Zuleitung der Flüssigkeit im unteren Bereich der Wanne ein gasdichter Verschluß der Glocke durch die Flüssigkeit erreicht werden kann und in der Glocke ein höherer Druck aufgebaut werden kann als in der ersten Wanne vorliegt, welcher durch das unter Druck in den Reaktor eingeführte Gas bedingt ist, das den hydrostatischen Druck der Flüssigkeit, insbesondere des Schwefels, zu überwinden hat.

Mündet in die Glocke eine Spülgasleitung, so kann, wenn erwünscht, eine weitere Verdünnung des Gases in der Glocke, beispielsweise unter die Explosionsgrenze, durchgeführt werden, so daß das Gas, das mit der Gasableitung abgezogen wird, bereits keine zusätzliche Gefährdung bedingen kann.

Ist die Gaszuführung in den Reaktor oberhalb des obersten Bereiches einer Zuleitungsöffnung für die Flüssigkeit aus der Wanne in die Glocke und damit zum Reaktor angeordnet, so kann auf Grund des Abstandes zwischen dem obersten Bereich einer Zuleitungsöffnung für die Flüssigkeit und der Gaszuführung ein besonders betriebssicherer Reaktor erreicht werden, da bei Druckaufbau innerhalb des Reaktors, beispielsweise bei erhöhtem Strömungswiderstand für die Flüssigkeit oder auch, wenn keine Flüssigkeit mehr durchtritt, Flüssigkeit aus der Glocke, also letztendlich aus dem Reaktor, in die erste Wanne rückgedrückt wird, wobei der größte Unterschied der beiden Flüssigkeitsspiegeln, u. zw. in der ersten Wanne und in der Glocke, dem aufgebauten Druck, also dem Überdrück, mit welchem das Gas in den Reaktor eingeleitet wird, entspricht.

Weist der Reaktor ein Wehr für den Austritt der Flüssigkeit aus diesem auf, welche oberhalb des Flüssigkeitsspiegels in der Glocke angeordnet ist, so kann das mit dem Reaktor ausgetriebene Gas aus der Flüssigkeit unmittelbar in den Gasraum in die Glocke eintreten, ohne erneut durch die Flüssigkeit strömen zu müssen, wodurch ein erneuter Lösungsvorgang des ausgetriebenen Gases in der Flüssigkeit auf einfache Weise wirksam vermieden wird.

Ist in der ersten Wanne eine weitere Wanne angeordnet, wobei die Glocke sowohl in die Flüssigkeit in der ersten als auch in der weiteren Wanne eintaucht, so sind mit besonders geringem konstruktiven Aufwand kommunizierende Gefäße gebildet, durch welche die Flüssigkeit zum Entgasen geleitet werden kann.

Ist der Reaktor mit dem Boden der weiteren Wanne unter Ausnahme der Zuleitungsöffnung für die Flüssigkeit, insbesondere dem flüssigen Schwefel, insbesondere direkt, fluiddicht verbunden, so wird eine strömungsmäßige Unterteilung der weiteren Wanne durchgeführt, womit eine Vermischung der unterschiedlich entgasten Flüssigkeiten einfach vermieden werden kann.

Ist in der weiteren Wanne und in der Glocke zumindest ein weiterer Reaktor mit Katalysator und Gaszuführung und Gasverteiler im unteren Bereich, welcher in die Flüssigkeit eintaucht, vorgesehen, so kann neben der additiven Wirkung der beiden Reaktoren eine doppelte Umleitung des Flüssigkeitsstromes innerhalb der weiteren Wanne erreicht werden wodurch die Homogenisierung der Flüssigkeit durch eine turbulente Strömung in der Wanne einfach erreicht werden kann. wobei dadurch die Entgasung zusätzlich gefördert wird.

Weist der weitere Reaktor ein Wehr für den Austritt der Flüssigkeit aus diesem auf, welche oberhalb des Flüssigkeitsspiegels, insbesondere in der ersten Wanne, angeordnet ist, so wird ein Überfließen der Flüssigkeit aus dem Reaktor mit einem weiteren Entgasungsvorgang sichergestellt.

Ist der weitere Reaktor mit dem Boden der weiteren Wanne unter Ausnahme der Zuleitöffnung für die Flüssigkeit, insbesondere dem flüssigen Schwefel, insbesondere direkt, fluiddicht verbunden, so liegt eine besonders einfache Konstruktion für die Entgasung von Flüssigkeiten vor, die materialsparend ist, wobei gleichzeitig Toträume, bezogen auf die Strömung der Flüssigkeiten und Gase, besonders wirksam vermieden sind.

Ist die Glockenwandung mit oder bei der Zuleitung für die Flüssigkeit mit der Seitenwandung des Reaktors fluiddicht verbunden, so kann ein direkter Eintritt der noch nicht entgasten Flüssigkeit in den Reaktor verwirklicht werden, so daß eine Vermischung von unterschiedlich entgaster Flüssigkeit einfach vermieden werden kann.

Ist eine Wandung der weiteren Wanne, welche innerhalb der Glocke angeordnet ist, mit der Seitenwandung des Reaktors fluiddicht verbunden, so kann auch hier ein unerwünschtes Vermischen der Flüssigkeiten mit unterschiedlichen Gasgehalten einfach unterbunden werden.

Ist in der weiteren Wanne außerhalb der Glocke ein nach oben offener Behälter, welcher insbesondere mit dem Boden der weiteren Wanne, vorzugsweise unmittelbar, fluiddicht verbunden ist, angeordnet, in welchen die Flüssigkeit über die Zuleitung entleert wird, der ein Wehr zum Überfließen für die Flüssigkeit aufweist, so kann die in die erste Wanne eintretende Flüssigkeit mit der einfachen Maßnahme des Überfließens aus einem Behälter bereits einer ersten Entgasung unterworfen werden, wobei weiters eine vollständige Füllung des Reaktors mit der Flüssigkeit auf einfache Weise sichergestellt ist.

Mündet die Zuführung für die Flüssigkeit in den Behälter unterhalb des Wehrs. so kann eine Durchmischung der Flüssigkeit durch den steten Zufluß derselben einfach erreicht werden, wobei weiters ein Verspritzen der Flüssigkeit leicht vermeidbar ist.

Ist in dem Behälter eine Heizung für die Flüssigkeit vorgesehen, so kann die erwünschte Temparatur, die eine Entgasung besonders vorteilhaft ermöglicht, unschwer eingestellt werden.

Ist in der ersten Wanne eine Kammer für die Aufnahme der entgasten Flüssigkeit vorgesehen, so kann innerhalb der ersten Wanne der gesamte Entgasungsvorgang und auch Zwischenlagerung der Flüssigkeit erfolgen, wodurch die Betriebssicherheit wesentlich erhöht werden kann.

Weist die Kammer eine Zuführung im Bereich des Bodens der ersten Wanne für die Flüssigkeit auf, so kann eine gasdichte Abtrennung von den anderen Bereichen der ersten Wanne auf einfachste Weise erreicht werden. Bei dem Vorsehen einer Zuleitung für inertes Gas in die Kammer kann eine Verdünnung des die Flüssigkeit überstehenden Gases durchgeführt werden

Die erfindungsgemäße Vorrichtung ist besonders geeignet, um flüssigen Schwefel zu entgasen, welcher insbesondere aus einer Claus-Anlage in flüssiger Form gewonnen werden kann.

Der nach der erfindungsgemäßen Verwendung gewonnene Schwefel weist einen besonders geringen Gehalt an Schwefelwasserstoffen und auch an Wasserstoffpolysulfiden auf.

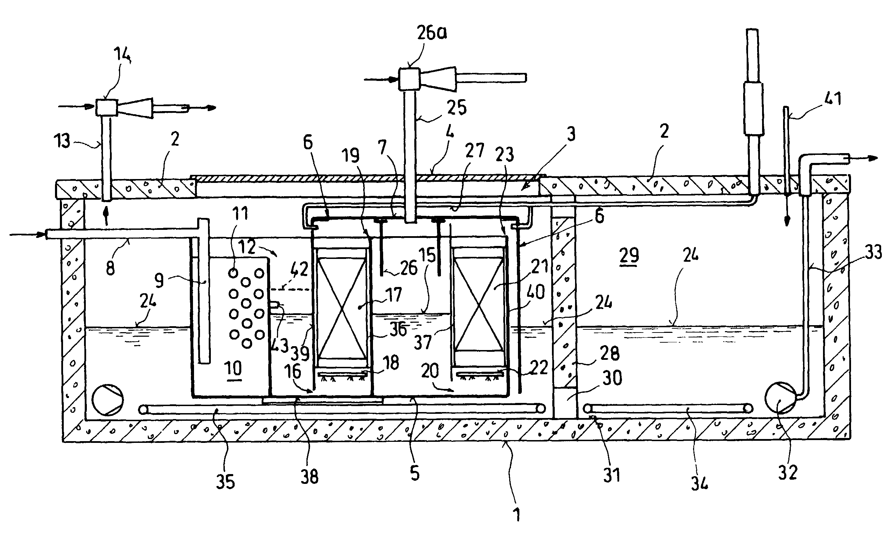

Im folgenden wird die Erfindung anhand der Zeichnung näher erläutert.

Die erste Wanne 1 ist mit sulfatbeständigem Beton aufgebaut. Sie weist eine Decke 2 mit einer Öffnung 3 auf, die durch eine Abdeckung 4 aus Stahl gasdicht verschlossen ist. Die erste Wanne, welche im wesentlichen einen Kubus darstellt, weist folgende Abmessungen auf: Länge 14,0 m, Breite 4,5 m, Höhe 3,0 m.

In dieser ersten Wanne ist eine weitere Wanne 5 aus schwefelresistentem Edelstahl angeordnet. Diese Wanne, welche einen nach oben offenen Kubus darstellt, besitzt folgende Abmessungen: Länge 4,0 m. Breite 2.0 m, Höhe 2.0 m.

Die Glocke 6, welche sowohl in die erste Wanne 1 als auch in die weitere Wanne 5 eintaucht, ist ebenfalls aus schwefelbeständigem Edelstahl aufgebaut. Die Glocke ist gasdicht ausgebildet und weist eine Abdeckung 7 auf. Der durch die Zuleitung 8 kommende flüssige Schwefel weist eine Temperatur von 150°C auf, wobei der Gehalt an Schwefelwasserstoff 150 ppm bis 200 ppm beträgt. Die Zuleitung weist ein Tauchrohr 9 auf, welches den flüssigen Schwefel in den Behälter 10, der eine Temperiereinrichtung, u. zw. Rohrbündel 11, aufweist, den Schwefel entleert. Der Schwefel rinnt über das Wehr 12, welches durch die obere Kante des Behälters 10 gebildet wird, in die weitere Wanne 5. Durch das Überfließen der Kante tritt eine teilweise Entgasung des Schwefels auf, wobei das überstehende Gasgemisch über die erste Absaugung 13, welche eine Wasserdampfstrahlabsaugung 14 aufweist, abgezogen wird. In der weiteren Wanne 5 unter Einschluß jenes Raumes, der von der Glocke abgedeckt ist, ist ein Flüssigkeitsspiegel 15 des Schwefels vorgesehen. Der flüssige Schwefel tritt durch die Zulcitöffnung 16 unterhalb des ersten zylindrischen Reaktors 17 ein. In dem Reaktor ist Aluminiumoxid

Im unteren Bereich des Reaktors ist eine Gaszuleitung mit Gasverteiler 18 für Luft mit 135°C vorgesehen, die oberhalb der obersten Kante der Zuleitöffnung für den Schwefel angeordnet ist. Durch die über die Gaszuleitung 18 zugeführte Luft wird die Gesamtmenge der Schwefelsäule im Reaktor reduziert, so daß über den hydrostatischen Druck des Schwefels in der weiteren Wanne derselbe durch den Reaktor gedrückt wird. Der Schwefel rinnt hierbei über das Wehr 19 in die weitere Wanne zurück und gelangt über die Zuleitöffnung 20 in den weiteren Reaktor 21. Oberhalb der oberen Kante der Zuleitöffnung 20 ist eine weitere Gaszuleitung mit Gasverteiler 22 angeordnet. Durch den Reaktor 21, in welchem ebenfalls ein Aluminiumoxid gemäß erstem Reaktor angeordnet ist, wird der flüssige Schwefel hindurchgeleitet und fließt über die ein Wehr 23 bildende Kante des Reaktors in die erste Wanne, wobei der Flüssigkeitsspiegel 24 oberhalb der unteren Kante der Wandung der Glocke 6 vorgesehen ist. Die Glocke 6 weist eine weitere Gasableitung 25 auf, die ebenfalls durch eine Wasserdampfstrahlabsaugung 26a gebildet ist. Die Gasableitung 25 ist im Inneren der Glocke durch eine Spritzwand 26 teilweise umschlossen, so daß die Absaugung von Schwefeltropfen dadurch im wesentlichen verhindert werden kann. In die Glocke mündet weiters eine Spülgasleitung 27, über welche Abluft aus der Claus-Anlage eingeleitet wird. Durch die Wand 28 in der ersten Wanne 1 wird eine Kammer 29 gebildet, in welcher der flüssige Schwefel über die Zuführung 30, welche in der Wandung 28 im Bereich des Bodens 31 der ersten Wanne vorgesehen ist, eintritt und in die eine Gasleitung 41 für inertes Gas, u. zw. Stickstoff, mündet. Aus der Kammer 29 wird der flüssige Schwefel über eine Pumpe 32 und Ableitung 33 der weiteren Verwendung, sei es zur weiteren Umsetzung oder zum Transport zugeleitet. Um die erwünschte Temperatur in der ersten Wanne einzuhalten, ist sowohl in der Kammer 29 als auch im restlichen Bereich der Wanne jeweils eine Heizung 34, 35, insbesondere durch Rohrbündel gebildet, vorgesehen.

Zur Bildung von kommunizierenden Gefäßen ist es erforderlich, daß der erste Reaktor mit dem Boden 38 mit Ausnahme der Zuleitöffnung für die Flüssigkeit flüssigkeitsdicht verbunden ist. Eine analoge Ausbildung ist für den weiteren Reaktor 21 vorgesehen. Der erste Reaktor ist jedoch mit der Glockenwandung fluiddicht verbunden. Der weitere Reaktor ist mit der Wandung 40 der weiteren Wanne 5 fluiddicht verbunden.

Tritt eine Verstopfung, beispielsweise des ersten Reaktors, ein, so baut sich im unteren Bereich ein Luftpolster auf, durch welchen der flüssige Schwefel durch die Zuleitöffnung 16 nach außen in die weitere Wanne 5 gedrückt wird, so daß der Flüssigkeitsspiegel 15, wie strichliert dargestellt, auf den Flüssigkeitsspiegel 42 ansteigt, wobei die maximale Höhendifferenz durch den Druck der in den Reaktor eingeleiteten Luft bedingt ist und die Höhe der Zuleitöffnung einen Austritt der Luft aus der Glocke in die erste Wanne verhindert. Weiters ist ein Flüssigkeitssensor 43 vorgesehen, welcher die Luftzufuhr unterbricht, wenn der Flüssigkeitsspiegel denselben erreicht.

In die erste Wanne wird flüssiger Schwefel, wie bereits ausgeführt, mit einem Gehalt an 150 ppm bis 200 ppm H₂S und Wasserstoffpolysulfiden in einer Menge von 73 kg pro Minute eingeleitet. Mit genau derselben Menge tritt der flüssige Schwefel aus dem Behälter 10 aus und in die weitere Wanne 5 ein. Mit demselben Mengananteil wird der erste und der weitere Reaktor durchflossen. In der ersten Wanne herrscht ein Druck von 0,99 bar und in der Gasphase liegt ein Gehalt von 50 ppm Schwefelwasserstoff oberhalb des Behälters 10 vor. Der in die weitere Wanne eintretende Schwefel weist bereits einen geringeren Gehalt an Schwefelwasserstoff und Wasserstoffpolysulfiden, u. zw. von 140 ppm bis 190 ppm, auf. Nach Verlassen des ersten Reaktors weist derselbe einen Gehalt von 70 % H₂S und Wasserstoffpolysulfiden der Ausgangswerte auf. In der Glocke herrscht ein Druck von 0,9 bar. Beim Austritt des Schwefels aus dem weiteren Reaktor weist der flüssige Schwefel lediglich einen Gehalt von 5 ppm H₂S auf und kann in dieser Form gefahrlos einer Lagerung in flüssiger oder fester Form oder auch dem Transport unter Weiterverarbeitung unterworfen werden. Die Gase aus der ersten Wanne, aus welcher 4,0 m³/Stunde abgesaugt werden und aus der Glocke, aus welcher 750 m³/Stunde abgesaugt werden, werden jeweils einer Verbrennungseinrichtung zugeführt.

## Patentansprüche

1. Vorrichtung zum Abtrennen von Gasen, insbesondere Schwefelwasserstoff, aus Flüssigkeiten, insbesondere flüssigem Schwefel, mit einer im wesentlichen gasdicht abgeschlossenen ersten Wanne (1), mit Zu- (8) und Ableitung (33) für die Flüssigkeit, zumindest einem oben und unten offenen Reaktor (17), welcher eine Gaszuführung mit Gasverteiler (18) in seinem unteren Bereich und einen Katalysator, z. B. Aluminiumoxid, aufweist und einer ersten Gasableitung (13), ***dadurch gekennzeichnet*, daß** der Reaktor (17) in einer Glocke (6) in der ersten Wanne (1), die vorzugsweise Heizeinrichtungen für die Flüssigkeit aufweist, angeordnet ist, die in Funktionsstellung gasdicht ist, welche eine weitere Gasableitung (25) aufweist und die Zuleitung (16) der Flüssigkeit im unteren Bereich der Glocke (6) unterhalb des oberen Endes des Reaktors (17), aus welchem die Flüssigkeit austritt, vorgesehen ist.

2. Vorrichtung nach Anspruch 1, ***dadurch gekennzeichnet,* daß** in die Glocke (6) eine Spülgasleitung (27) mündet.

3. Vorrichtung nach Anspruch 1 oder 2, ***dadurch gekennzeichnet,* daß** die Gaszuführung (18) in den Reaktor (17) oberhalb des obersten Bereiches einer Zuleitöffnung (16) für die Flüssigkeit aus der Wanne in die Glocke (6) zum Reaktor (17) angeordnet ist.

4. Vorrichtung nach Anspruch 2 oder 3, ***dadurch gekennzeichnet,* daß** der Reaktor (17) ein Wehr (19) für den Austritt der Flüssigkeit aus demselben aufweist, welche oberhalb des Flüssigkeitsspiegels (15) in der Glocke (6) angeordnet ist.

5. Vorrichtung nach einem der Ansprüche 1 bis 4, **dadurch *gekennzeichnet*, daß** in der ersten Wanne (1) eine weitere Wanne (5) angeordnet ist, wobei die Glocke (6) sowohl in die Flüssigkeit in der ersten als auch weiteren Wanne eintaucht.

6. Vorrichtung nach einem der Ansprüche 1 bis 5, ***dadurch gekennzeichnet,* daß** der Reaktor (17) mit dem Boden (38) der weiteren Wanne (5) unter Ausnahme der Zuleitöffnung (16) für die Flüssigkeit, insbesondere direkt, fluiddicht verbunden ist.

7. Vorrichtung nach einem der Ansprüche 1 bis 6, ***dadurch gekennzeichnet,* daß** in der weiteren Wanne (5) und in der Glocke (6) zumindest ein weiterer Reaktor (21) mit Katalysator und Gaszuführung und Gasverteiler (22) im unteren Bereich, welcher in die Flüssigkeit eintaucht, vorgesehen ist.

8. Vorrichtung nach einem der Ansprüche 1 bis 7, ***dadurch gekennzeichnet*, daß** die Gaszuführung (22) in den weiteren Reaktor (21) oberhalb des obersten Bereiches einer Zuleitoffnung (16) für die Flüssigkeit aus der weiteren Wanne (5) in die Glocke (6) angeordnet ist

9. Vorrichtung nach einem der Ansprüche 1 bis 8, ***dadurch gekennzeichnet*, daß** der weitere Reaktor (21) mit dem Boden (38) der weiteren Wanne (5) mit Ausnahme der Zuleitöffnung (20) für die Flüssigkeit, insbesondere direkt, fluiddicht verbunden ist.

10. Vorrichtung nach einem der Ansprüche 1 bis 9, ***dadurch gekennzeichnet,* daß** die Glockenwandung (39) mit oder bei der Zuleitung (16) für die Flüssigkeit mit der Seitenwandung des Reaktors (17) fluiddicht verbunden ist.

11. Vorrichtung nach einem der Ansprüche 1 bis 10, ***dadurch gekennzeichnet,* daß** eine Wandung (40) der weiteren Wanne (5), welche innerhalb der Glocke (6) angeordnet ist, mit der Seitenwandung des Reaktors (21) fluiddicht verbunden ist.

12. Vorrichtung nach einem der Ansprüche 1 bis 11, ***dadurch gekennzeichnet*, daß** in der weiteren Wanne (5) außerhalb der Glocke (6) ein nach oben offener Behälter (10), welcher insbesondere mit dem Boden (38) der weiteren Wanne (5), vorzugsweise unmittelbar, fluiddicht verbunden ist, angeordnet ist, in welchen die Flüssigkeit über die Zuleitung (8) entleert wird, der ein Wehr (12) zum Überfließen der Flüssigkeit aufweist.

13. Vorrichtung nach Anspruch 12, ***dadurch gekennzeichnet,* daß** in den Behälter (10) die Zuführung (8, 9) für die Flüssigkeit unterhalb des Wehrs (12) mündet.

14. Vorrichtung nach Anspruch 12 oder 13, ***dadurch gekennzeichnet,* daß** in den Behälter (10) ein Wärmetauscher (11) für die Flüssigkeit angeordnet ist.

15. Vorrichtung nach einem der Ansprüche 1 bis 14, ***dadurch gekennzeichnet*, daß** in der ersten Wanne (1) eine Kammer (29) für die Aufnahme der entgasten Flüssigkeit vorgesehen ist.

16. Vorrichtung nach Anspruch 15, ***dadurch gekennzeichnet,* daß** die Kammer (29) eine Zuführung (30) im Bereich des Bodens (31) der ersten Wanne (1) für die Flüssigkeit und vorzugsweise eine Zuleitung (41) für ein weiteres Gas aufweist.

17. Verwendung der Vorrichtung nach einem der Ansprüche 1 bis 16 zur Abtrennung von Schwefelwasserstoff aus flüssigem Schwefel.

## Claims

1. Device for separating gases, in particular hydrogen sulphide, from liquids, in particular liquid sulphur, with an essentially sealed gastight first tank (1), with an inlet line (8) and an outlet line (33) for the liquid, at least one reactor (17) which is open at the top and the bottom and exhibits a gas supply with a gas distributor (18) in its lower area and a catalyst, e.g. aluminium oxide, and with a first gas outlet line (13), **characterised in that** the reactor (17) is arranged in a bell (6) in the first tank (1) which preferably exhibits heating devices for the liquid, which bell is gastight in the operating position and exhibits a further gas outlet line (25), and the inlet line (16) of the liquid is provided in the lower area of the bell (6) below the upper end of the reactor (17) from which the liquid exits.

2. Device according to claim 1, **characterised in that** a flushing gas line (27) debouches into the bell (6).

3. Device according to claim 1 or 2, **characterised in that** the gas supply (18) into the reactor (17) is arranged above the uppermost area of an inlet opening (16) for the liquid from the tank (1) into the bell (6) to the reactor (17).

4. Device according to claim 2 or 3, **characterised in that** the reactor (17) exhibits a weir (19) for the exit of the liquid therefrom which is arranged above the liquid level (15) in the bell (6).

5. Device according to one of claims 1 to 4, **characterised in that** a further tank (5) is arranged in the first tank (1), and the bell (6) is immersed in the liquid in both the first and the further tank.

6. Device according to one of claims 1 to 5, **characterised in that** the reactor (17) is connected, in particular directly, with a fluid-tight seal to the bottom (38) of the further tank (5) except for the inlet opening (16) for the liquid.

7. Device according to one of claims 1 to 6, **characterised in that** the further tank (5) and in the bell (6) there is at least one further reactor (21) with a catalyst and a gas supply and gas distributor (22) in the lower area which is immersed in the liquid.

8. Device according to one of claims 1 to 7, **characterised in that** the gas supply (22) into the further reactor (21) is arranged above the uppermost area of an inlet opening (16) for the liquid from the further tank (5) into the bell (6).

9. Device according to one of claims 1 to 8, **characterised in that** the further reactor (21) is connected, in particular directly, with a fluid-tight seal to the bottom (38) of the further tank (5) except for the inlet opening (20) for the liquid.

10. Device according to one of claims 1 to 9, **characterised in that** the bell wall (39) with or at the inlet line (16) for the liquid is connected with a fluid-tight seal to the side wall of the reactor (17).

11. Device according to one of claims 1 to 10, **characterised in that** a wall (40) of the further tank (5) which is arranged inside the bell (6) is connected with a fluid-tight seal to the side wall of the reactor (21).

12. Device according to one of claims 1 to 11, **characterised in that** in the further tank (5) outside the bell (6) there is a container (10) which is open at the top and in particular is connected, preferably directly, with a fluid-tight seal to the bottom (38) of the further tank (5) and into which the liquid is drained through the inlet line (8) and exhibits a weir (12) to allow the liquid to overflow.

13. Device according to claim 12, **characterised in that** the supply (8, 9) for the liquid debouches into the container (10) below the weir (12).

14. Device according to claim 12 or 13, **characterised in that** a heat exchanger (11) for the liquid is arranged in the container (10).

15. Device according to one of claims 1 to 14, **characterised in that** a chamber (29) for receiving the degassed liquid is provided in the first tank (1).

16. Device according to claim 15, **characterised in that** the chamber (29) exhibits a supply (30) in the area of the bottom (31) of the first tank (1) for the liquid and preferably an inlet line (41) for a further gas.

17. Use of the device according to one of claims 1 to 16 for separating hydrogen sulphide from liquid sulphur.

## Revendications

1. Dispositif de séparation de gaz, en particulier du sulfure d'hydrogène, et de liquides, en particulier du soufre liquide, avec une première cuve (1) fermée de manière essentiellement étanche aux gaz avec arrivée (8) et sortie (33) pour le liquide, au moins un réacteur (17) ouvert à ses parties supérieure et inférieure, qui présente une amenée de gaz avec diffuseur de gaz (18) dans la zone inférieure et un catalyseur, par exemple de l'oxyde d'aluminium, et une première évacuation de gaz (13), **caractérisé en ce que** le réacteur (17) est placé dans une cloche (6) dans la première cuve (1), qui présente de préférence des dispositifs de chauffage du liquide, ladite cloche étant étanche aux gaz en mode de fonctionnement, présentant une autre évacuation de gaz (25), et l'amenée (16) de liquide dans la partie inférieure de la cloche (6) étant prévue au-dessous de l'extrémité supérieure du réacteur (17) d'où est alimenté le liquide.

2. Dispositif selon le revendication 1, **caractérisé en ce qu'**une ligne de gaz de rinçage (27) débouche dans la cloche (6).

3. Dispositif selon la revendication 1 ou 2, **caractérisé en ce que** l'amenée de gaz (18) dans le réacteur (17) est placée au-dessus de la partie supérieure d'une ouverture d'amenée (16) du liquide de la cuve dans la cloche (6) vers le réacteur (17).

4. Dispositif selon la revendication 2 ou 3, **caractérisé en ce que** le réacteur (17) présente un barrage (19) pour la sortie du liquide dudit réacteur, et placé au-dessus du niveau de liquide (15) dans la cloche (6).

5. Dispositif selon l'une des revendications 1 à 4, **caractérisé en ce que** dans la première cuve (1) se trouve une deuxième cuve (5), et que la cloche (6) plonge dans le liquide tant de la première que de la deuxième cuve.

6. Dispositif selon l'une des revendications 1 à 5, **caractérisé en ce que** le réacteur (17) est en communication avec le fond (38) de l'autre cuve (5) à l'exception de l'ouverture d'amenée (16) de liquide, ceci en particulier de manière directe et étanche au fluide.

7. Dispositif selon l'une des revendications 1 à 6, **caractérisé en ce que** dans l'autre cuve (5) et dans la cloche (6) est prévu au moins un autre réacteur (21) avec catalyseur, amenée de gaz et distributeur de gaz (22) à la partie inférieure, lequel plonge dans le liquide.

8. Dispositif selon l'une des revendications 1 à 7, **caractérisé en ce que** l'amenée de gaz (22) dans l'autre réacteur (21) est placée au-dessus de la zone supérieure d'une ouverture d'amenée (16) du liquide de l'autre cuve (5) dans la cloche (6).

9. Dispositif selon l'une des revendications 1 à 8, **caractérisé en ce que** l'autre réacteur (21) est en communication avec le fond (38) de l'autre cuve (5), à l'exception de l'ouverture d'amenée (20) du liquide, ceci en particulier de manière directe et étanche au fluide.

10. Dispositif selon l'une des revendications 1 à 9, **caractérisé en ce que** la paroi (39) de la cloche est reliée de manière étanche au fluide, à ou par l'amenée (16) de liquide, avec la paroi latérale du réacteur (17).

11. Dispositif selon l'une des revendications 1 à 10, **caractérisé en ce qu'**une paroi (40) de l'autre cuve (5), qui se trouve dans la cloche (6), est reliée de manière étanche au fluide à la paroi latérale du réacteur (21).

12. Dispositif selon l'une des revendications 1 à 11, **caractérisé en ce que**, dans l'autre cuve (5) et à l'extérieur de la cloche (6), se trouve un réservoir (10) ouvert à sa partie supérieure et relié de préférence de manière directe et étanche au fluide avec le fond (38) de l'autre cuve (5), et dans lequel se vide le liquide via l'amenée (8), et présentant un barrage (12) pour le débordement de liquide.

13. Dispositif selon la revendication 12, **caractérisé en ce que** dans le réservoir (10), l'amenée (8, 9) de liquide débouche au-dessous du barrage (12).

14. Dispositif selon la revendication 12 ou 13, **caractérisé en ce que**, dans le réservoir (10), est prévu un échangeur de chaleur (11) pour le liquide.

15. Dispositif selon l'une des revendications 1 à 14, **caractérisé en ce que**, dans la première cuve (1), est prévue une chambre (29) pour la réception du liquide dégazé.

16. Dispositif selon la revendication 15, **caractérisé en ce que** la chambre (29) présente une amenée (30) à proximité du fond (31) de la première cuve (1) pour le liquide, et de préférence une amenée (41) pour un autre gaz.

17. Utilisation du dispositif selon l'une des revendications 1 à 16 pour la séparation de sulfure d'hydrogène et de soufre liquide.
